Europäisches Patentamt

**European Patent Office**

**Office européen des brevets**

(19)

(11) Numéro de publication: **0 114 552**
**B1**

(12) **FASCICULE DE BREVET EUROPEEN**

(45) Date de publication du fascicule du brevet:
**08.10.86**

(51) Int. Cl.⁴: **G 01 N 33/48,** G 01 N 15/04

(21) Numéro de dépôt: **83402442.4**

(22) Date de dépôt: **16.12.83**

(54) **Appareil d'analyses sanguines et procédé pour sa mise en oeuvre.**

(30) Priorité: **17.12.82 FR 8221221**

(43) Date de publication de la demande:
**01.08.84 Bulletin 84/31**

(45) Mention de la délivrance du brevet:
**08.10.86 Bulletin 86/41**

(84) Etats contractants désignés:
**AT BE CH DE FR GB IT LI LU NL SE**

(56) Documents cités:
**FR - A - 978 379**
**FR - A - 1 077 015**
**FR - A - 2 292 979**
**US - A - 3 827 286**

(73) Titulaire: **Poncept, Gérard, 10 Chemin de Dalibray Gaillonnet par Seraincourt, F-95450 Vigny (FR)**

(72) Inventeur: **Poncept, Gérard, 10 Chemin de Dalibray Gaillonnet par Seraincourt, F-95450 Vigny (FR)**

(74) Mandataire: **Nony, Michel, Cabinet Nony 29, rue Cambacérès, F-75008 Paris (FR)**

**Description**

La présente invention est relative à un appareil d'analyses médicales et plus précisement à un appareil d'analyses sanguines permettant la détermination de vitesses de sédimentation globulaire, ainsi qu'à un procédé pour mettre en oeuvre celui-ci.

On mesure traditionnellement la vitesse de sédimentation en utilisant un tube ou pipette de Westergreen, c'est-à-dire, un tube mince ouvert à ses deux extrémités. Le manipulateur plonge tout d'abord un tel tube dans un tube de diamètre plus important contenant un prélèvement sanguin puis aspire le sang depuis l'extrémité supérieure du tube de Westergreen jusqu'à une graduation supérieure de référence déterminée du tube. Le tube est ensuite fermé à sa partie inférieure et placé sur un support. On procède ensuite à des lectures espacées, traditionnellement la première au bout d'une heure, et la seconde au bout de deux heures du niveau des hématies sédimentées dans le tube. On procède après l'analyse au rinçage des tubes utilisés.

On conçoit que pour un laboratoire d'analyses médicales pratiquant quotidiennement un grand nombre de mesures de vitesse de sédimentation, le processus qui vient d'être décrit doit être répété autant de fois qu'il y a d'échantillons sanguins à analyser. Outre le fait que ce procédé est relativement long à mettre en oeuvre, il présente également un danger médical pour le manipulateur qui doit aspirer par la bouche le sang à faire passer des tubes contenant les prélèvements dans les tubes de Westergreen jusqu'au niveau approprié, et qui peut en cas d'aspiration mal dosée avaler du sang contaminé.

On connait déjà d'après le brevet US-A-3 827 286 un appareil de détermination de vitesse de sédimentation globulaire qui comprend un premier organe de support comportant une pluralité de tubes gradués, ouverts à leurs deux extrémités et maintenus verticalement espacés sur ledit organe de support, et un second organe de support comportant une pluralité de tubes, de diamètre plus important que les tubes montés sur le premier organe de support et aptes à recevoir chacun un prélèvement sanguin, lesdits tubes étant espacés verticalement sur ledit second organe de support et un dispositif unique d'aspiration monté à l'extrémité supérieure du premier organe de support et susceptible d'être relié à l'extrémité supérieure de chacun des tubes du premier organe de support, les organes de support étant mobiles l'un par rapport à l'autre entre une première position dans laquelle les tubes du premier organe de support sont écartés des tubes du second organe de support et une seconde position dans laquelle les tubes du premier organe de support plongent par leur extrémité inférieure dans les tubes du second organe de support.

Les tubes gradués sont alors remontés verticalement et on laisse s'effectuer dans ces tubes la sédimentation des hématies et l'on procède aux lectures de niveau habituelles à intervalles prédéterminés.

L'inconvénient essentiel de l'appareil décrit dans le document antérieur est que l'aspiration est maintenue dans les tubes gradués pendant la phase de sédimentation ce qui d'une part, compte tenu des périodes de lecture relativement longues, solicite de façon importante le dispositif d'aspiration mais qui surtout présente le risque d'échappement accidentel du sang par suite d'une défaillance du dispositif d'aspiration.

L'inconvénient d'un échappement accidentel est évident pour le personnel appelé à effectuer les analyses et ce d'autant plus que le sang à analyser présente des dangers de contamination.

La présente invention se propose de réaliser un appareil évitant les inconvénients et risques mentionnés.

L'appareil selon l'invention se caractérise essentiellement par le fait qu'il comprend une pluralité de bouchage, aptes à obturer de manière hermétique les orifices inférieurs des tubes montés sur les premiers organes de support, les organes de support étant mobiles l'un par rapport à l'autre vers une troisième position dans laquelle les tubes du premier organe de support coopèrent aves les éléments de bouchage pour assurer l'obturation hermétique de leur extrémité inférieure par lesdits éléments de bouchage.

Selon la présente invention le dispositif d'aspiration est donc actionné seulement lorsque les organes de support sont dans ladite seconde position pour remplir chacun des tubes du premier organe de support jusqu'à un niveau supérieur de référence prédéterminé, l'aspiration étant maintenue jusqu'à ce que les organes de support soient amenés dans ladite troisième position. L'aspiration est par contre supprimée pendant la phase de sédimentation des hématies au cours de laquelle les organes de support sont maintenus dans leur troisième position jusqu'à achèvement des lectures de niveau des hématies sédimentées.

Dans un premier mode de réalisation les éléments de bouchage se présentent sous la forme de bouchons montés sur ledit second organe de support, et comportent des dimensions correspondant aux orifices inférieurs des tubes montés sur le premier organe de support pour permettre une fermeture étanche des extrémités inférieures desdits tubes lorsqu'ils sont amenés sur lesdits bouchons.

Dans un second mode de réalisation les éléments de bouchage sont formés chacun d'un embout tubulaire élastique emmanché à force à l'extrémité inférieure de chacun des tubes du premier organe de support, dépassant de l'extrémité inférieure desdits tubes, et coopérant avec la paroi des tubes du second organe de support pour fermer l'extrémité inférieure des tubes du premier organe de support lorsque ceux-ci sont amenés au voisinage du fond des tubes du second organe de support, position dans laquelle s'effectue la sédimentation des hématies dans ce second mode de réalisation.

Dans un mode de réalisation particulièrement avantageux de l'appareil, les organes de support sont réalisés sour la forme de cylindres de section circulaire à la périphérie desquels sont respectivement montés les tubes et le cas échéant les éléments de bouchage.

De préférence selon l'invention, le dispositif d'aspiration est monté à l'extrémité supérieure du premier organe de support, ce dispositif d'aspiration pouvant être de tout type approprié, par exemple un piston coulissant dans un cylindre, une poire à trois soupapes, une pompe d'aspiration et de refoulement munie le cas échéant d'un filtre et actionnée par un micromoteur.

L'appareil selon l'invention est avantageusement complété pour son nettoyage par une cuve dans laquelle lappareil dans son ensemble peut être plongé après achèvement des analyses, le dispositif d'aspiration pouvant alors avantageusement être utilisé pour nettoyer les tubes lorsque l'appareil est plongé dans l'eau contenue dans la cuve.

D'autres avantages et caractéristiques de l'invention apparaîtront à la lecture de la description suivante d'un exemple de réalisation nullement limitatif en se référant au dessin annexé dans lequel:

la figure 1 illustre schématiquement en perspective éclatée une forme de réalisation d'appareil selon l'invention,

les figures 2 à 4 illustrent schématiquement l'appareil de la figure 1 selon trois positions de fonctionnement,

les figures 5 à 7 illustrent un appareil selon une seconde forme de réalisation selon trois positions de fonctionnement et

la figure 8 illustre, en vue en coupe agrandie, la disposition des tubes dans ladite troisième position.

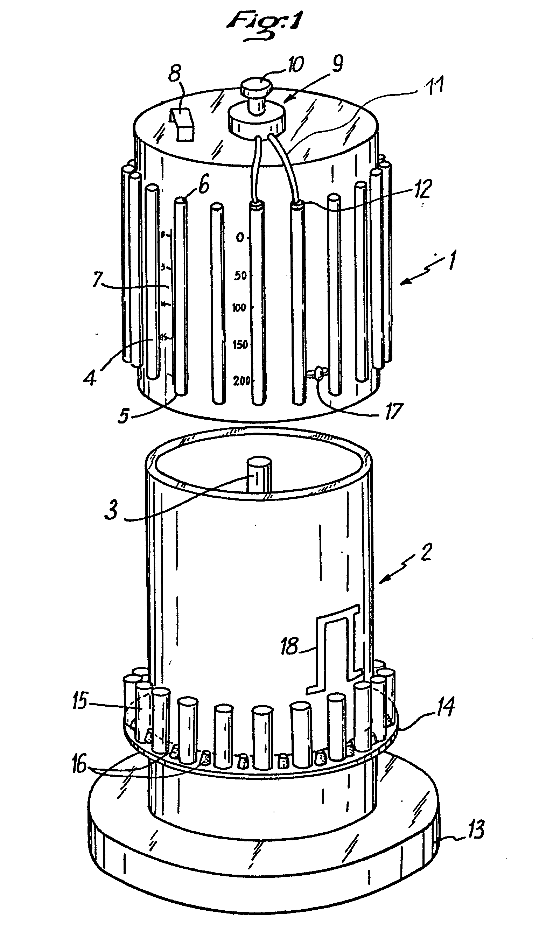

L'appareil selon l'invention représenté à la figure 1 comprend essentiellement deux cylindres de section circulaire 1 et 2, le cylindre supérieur 1 étant susceptible d'être emmanché sur le cylindre inférieur 2, les deux cylindres étant ainsi montés concentriques autour d'un axe 3.

Le cylindre supérieur 1 sert de support à une pluralité de tubes de Westergreen 4, par exemple au nombre de vingt cinq, les tubes 4 étant espacés sur la périphérie du cylindre 1.

Chacun des tubes 4 est ouvert à ses extrémités inférieure 5 et supérieure 6. Chaque tube est gradué et, de préférence, il est également prévu une graduation correspondante 7 sur la paroi du cylindre.

Sur la face supérieure du cylindre 1 est prévu un organe de préhension tel qu'une poignée 8 et un dispositif d'aspiration désigné globalement par 9 et qui, dans l'exemple représenté, est constitué par un piston coulissant dans un cylindre et manoeuvré par l'intermédiaire d'une vis molletée 10. Le dispositif d'aspiration 9 est relié à chacune des extrémités supérieures 6 des tubes Westergreen 4, par un conduit souple 11 muni d'un embout 12 fermant l'extrémité supérieure 6 de chaque tube.

Le cylindre inférieur 2 comporte une embase 13 et une collerette annulaire 14 sur laquelle sont montés en alternance des tubes à essais 15 aptes à recevoir chacun un prélèvement sanguin et des bouchons 16 aptes chacun à fermer de manière étanche l'extrémité inférieure 5 des tubes de Westergreen 4. Le nombre des tubes 15 et des bouchons 16 est égal au nombre des tubes de Westergreen 4 du premier cylindre 1, dans l'exemple considéré vingt cinq.

Il est avantageusement prévu selon l'invention, pour maintenir dans des positions relatives prédéterminées le cylindre supérieur 1 par rapport au cylindre inférieur 2, un mécanisme comportant une tige traversant diamétralement le cylindre 1, faisant saillie de sa paroi extérieure, telle que représentée en 17 sur la figure 1, ladite tige pouvant coulisser dans des rainures 18 diamétralement opposées réalisées dans la paroi du cylindre inférieur 2, chaque rainure comportant plusieurs tronçons verticaux et horizontaux.

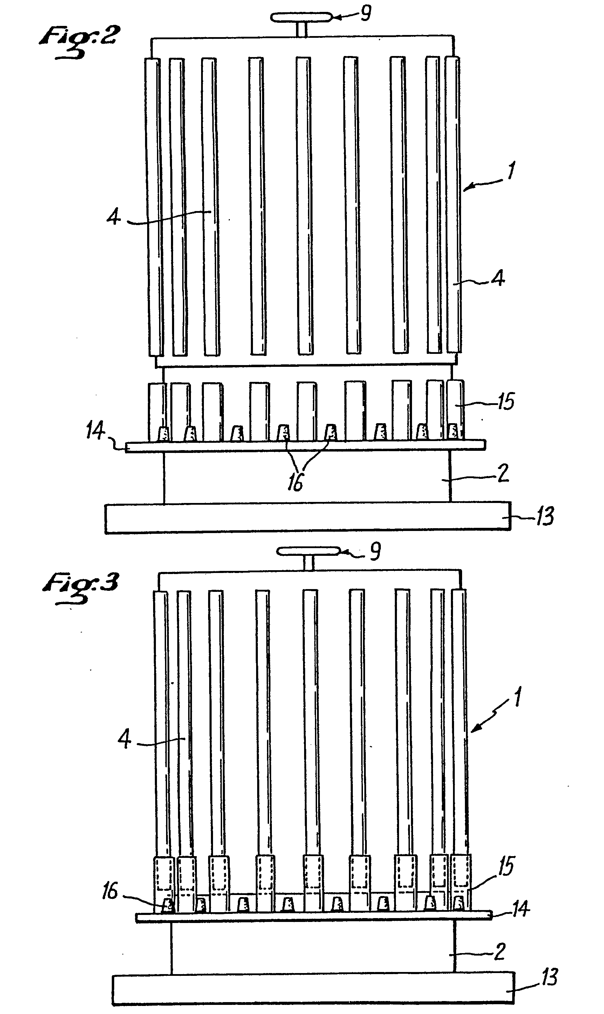

On va maintenant décrire en se référant aux figures 2 à 4, un mode de mise en oeuvre de l'appareil selon l'invention.

On place d'abord comme illustré sur la figure 2 le cylindre 1 en position haute par rapport au cylindre 2 de manière à permettre la mise en place des tubes 15 contenant les prélèvements sanguins à leurs emplacements respectifs sur la collerette 14 du cylindre 2.

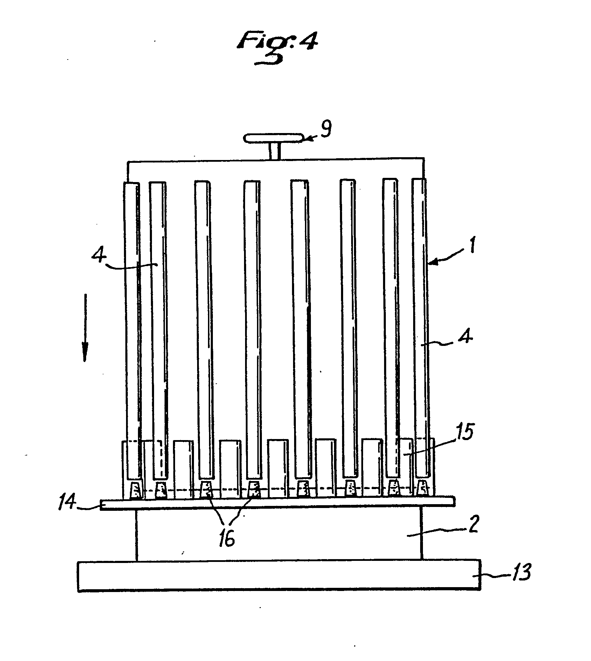

On abaisse ensuite le cylindre 1 par rapport au cylindre 2 jusqu'à l'amener dans la position illustrée à la figure 3 dans laquelle chacun des tubes de Westergreen 4 du cylindre 1 plonge dans un tube 15 du cylindre 2.

A l'aide du dispositif d'aspiration 9 on fait remonter une quantité prédéterminée de sang dans chacun des tubes de Westergreen 4 jusqu'au niveau supérieur de référence correspondant à la valeur 0 (figure 1), après quoi, tout en maintenant l'aspiration, on tourne le cylindre 1 par rapport au cylindre 2 jusqu'à amener les tubes de Westergreen 4 à l'aplomb des bouchons 16, comme illustré à la figure 4 après quoi on abaisse le cylindre 1 pour engager chacun des tubes 4 sur un bouchons 16.

On interrompt alors l'aspiration. L'appareil se trouve ainsi en position de mesure et l'on peut relever à intervalles appropriés le niveau de sédimentation des hématies dans les tubes 4 par lecture soit des graduations de chacun des tubes soit par référence aux graduations de l'échelle de mesure 7 prévue sur le cylindre supérieur.

Une fois l'analyse terminée on retire les tubes 15 et l'on place l'ensemble de l'appareil dans une cuve à circulation d'eau dans laquelle on peut réaliser le rinçage des tubes 4 et du reste de l'appareil en utilisant avantageusement à cet effet le dispositif d'aspiration 9 pour créer une circulation d'eau dans les tubes.

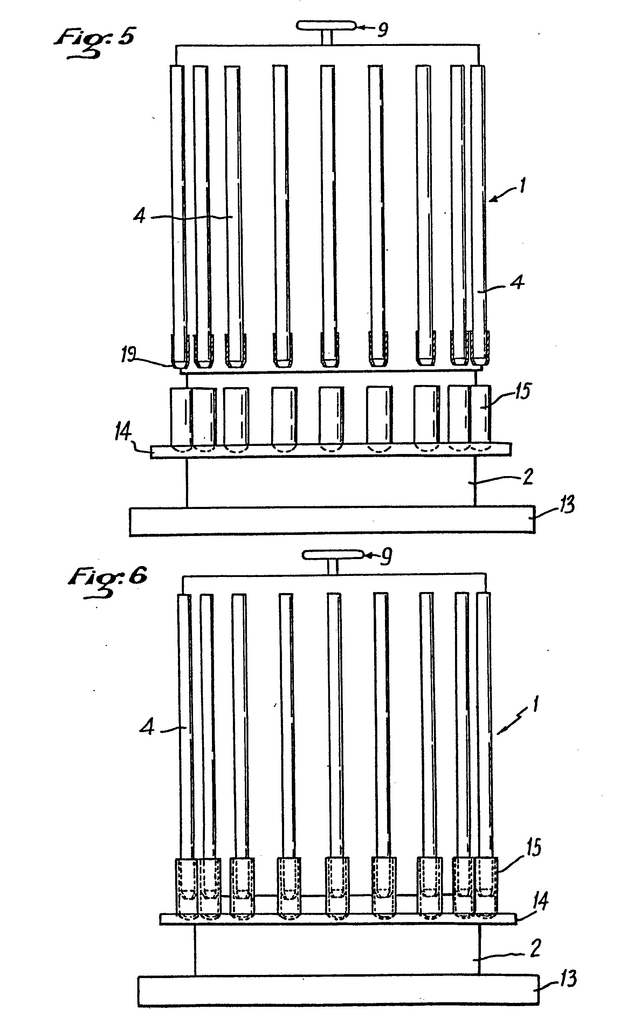

L'appareil illustré figures 5 à 8 présente une structure d'ensemble similaire à celui décrit aux figures précédentes, mais s'en distingue essentiellement par la nature des éléments de bouchage et les mouvements permettant d'assurer l'obturation des tubes 4 par les éléments de bouchage.

Dans ce mode de réalisation, au lieu de comprendre une pluralité de bouchons 16 montés sur la collerette 14, l'appareil comprend une pluralité d'embouts tubulaires élastiques 19 montés à ajustage serré à l'extrémité inférieure des tubes 4, dépassant de ladite extrémité inférieure, et comportant de préférence une partie terminale de section réduite.

Pour la mise en oeuvre de l'appareil du mode de réalisation des figures 5 à 8 on procède tout d'abord comme pour le premier mode de réalisation à la mise en place des tubes 15 contenant les prélèvements sanguins à leurs emplacements respectifs sur la collerette 14 du cylindre 2.

On abaisse ensuite le cylindre 1 par rapport au cylindre 2 jusqu'à l'amener dans la position illustrée à la figure 6 dans laquelle chacun des tubes de Westergreen 4 du cylindre 1 plonge dans une tube 15 du cylindre 2.

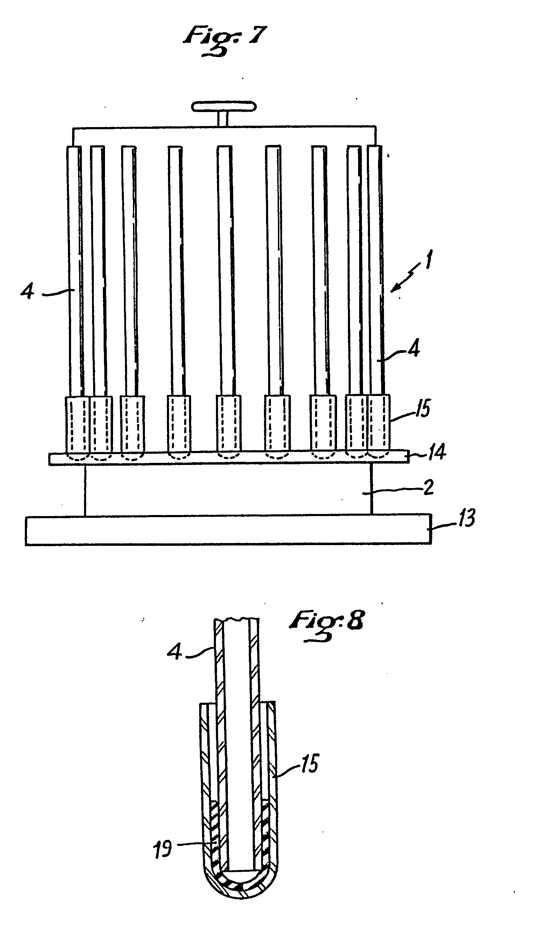

A l'aide du dispositif d'aspiration 9 on fait alors remonter une quantité prédéterminée de sang dans chacun des tubes de Westergreen 4 jusqu'au niveau supérieur de référence correspondant à la valeur 0, après quoi tout en maintenant l'aspiration, on abaisse le cylindre 1 par rapport au cylindre 2 jusqu'à amener les tubes de Westergreen 4 au voisinage du fond des tubes 15, ce qui, comme on le voit le mieux sur la figure 8 amène les embouts 19 à se déformer en épousant la forme de la paroi inférieure des tubes 15 et assurer l'obturation de l'extrémité inférieure des tubes 4.

On peut alors supprimer l'aspiration et laisser s'effectuer la sédimentation des hématies.

## Revendications

1. Appareil de détermination de vitesse de sédimentation globulaire comprenant un premier organe de support comportant une pluralité de tubes gradués, ouvert à leurs deux extrémités, et maintenus verticalement espacés sur ledit organe de support et un second organe de support comportant une pluralité de tubes, de diamètre plus important que les tubes montés sur le premier organe de support et aptes à recevoir chacun un prélèvement sanguin, lesdits tubes étant espacés verticalement sur ledit second organe de support, et un dispositif unique d'aspiration monté à l'extrémité supérieure du premier organe de support et susceptible d'être relié à l'extrémité supérieure de chacun des tubes du premier organe de support, les organes de support étant mobiles l'un par rapport à l'autre entre une première position dans laquelle les tubes du premier organe de support sont écartés des tubes du second organe de support, une seconde position dans laquelle les tubes du premier organe de support plongent par leur extrémité inférieure dans les tubes du second organe de support, et une troisième position dans laquelle s'effectue la sédimentation des hématies caractérisé par le fait qu'il comprend une pluralité d'éléments de bouchage (16; 19) aptes à obturer de manière hermétique les orifices inférieurs (5) des tubes (4) montés sur le premier organe de support (1), lesdits organes de support (1; 2) étant mobiles l'un par rapport à l'autre vers une troisième position dans laquelle les tubes (4) du premier organe de support (1) coopèrent avec les éléments de bouchage (16; 17) pour assurer l'obturation hermétique de leur extrémité inférieure par lesdits éléments de bouchage.

2. Appareil selon la revendication 1, caractérisé par le fait que les éléments de bouchage sont constitués par des bouchons (16) montés sur ledit second organe de support (2), de dimensions correspondant aux dimensions des orifices inférieurs (5) des tubes (4) montés sur le premier organe de support, les tubes (4) du premier organe de support s'engageant, à ladite troisième position, par leur extrémité inférieure sur lesdits éléments de bouchage.

3. Appareil selon la revendication 1, caractérisé par le fait que lesdits éléments de bouchage comprennent un embout tubulaire élastique (19) monté à ajustage serré à l'extrémité inférieure des tubes (4) montés sur le premier organe de support, dépassant vers le bas depuis ladite extrémité, lesdits embouts tubulaires étant déformés au voisinage du fond des tubes (15) montés sur le second organe de support lorsque les tubes (4) du premier organe de support sont abaissés dans les tubes (15) du second organe de support dans ladite troisième position.

4. Appareil selon l'une quelconque des revendications précédentes, caractérisé par le fait que les organes de support sont réalisés sour la forme de cylindres (1; 2) concentriques, de section circulaire, à la périphérie desquels sont respectivement montés les tubes (4; 15).

5. Procédé pour la mise en oeuvre de l'appareil selon l'une quelconque des revendications précédentes dans lequel l'on place les organes de support dans ladite première position pour mettre en place sur le second organe de support les tubes contenant les échantillons sanguins, on amène les organes de support dans ladite seconde position et l'on actionne le dispositif d'aspiration pour remplir chacun des tubes du premier organe de support jusqu'à un niveau supérieur de référence prédéterminé, caractérisé par le fait que l'on déplace l'un au moins des organes de support jusqu'à amener les organes de support dans leur troisième position tout en maintenant l'aspiration pendant ledit déplacement, et que l'on supprime l'aspiration et l'on maintient les supports dans cette troisième position jusqu'à achèvement des lectures de niveau des hématies sédimentées, après quoi on procède au rinçage de l'appareil.

## Patentansprüche

1. Vorrichtung zur Bestimmung der Blutkörperchensenkungsgeschwindigkeit mit einem ersten Halteorgan, das mehrere mit Skaleneinteilungen versehene, an beiden Enden offene Rohre trägt, die senkrecht in Abstand zueinander an dem Halteorgan gehalten sind, und mit einem zweiten Halteorgan, das mehrere jeweils zur Aufnahme einer Blutprobe dienende Rohre trägt, die einen grösseren Durchmesser als die an dem ersten Halteorgan montierten Rohre aufweisen und senkrecht in Abstand zueinander an dem zweiten Halteorgan angeordnet sind, und mit einer am oberen Ende des ersten Halteorgans angeordneten gemeinsamen Saugvorrichtung die mit den oberen Enden jedes der an dem ersten Halteorgan montierten Rohre verbindbar ist, wobei die Halteorgane relativ zueinander zwischen einer ersten Position, in der die Rohre des ersten Halteorgans von den Rohren des zweiten Halteorgans abgerückt sind, einer zweiten Position, in der die Rohre des ersten Halteorgans mit ihren unteren Enden in die Rohre des zweiten Halteorgans eintauchen, und einer dritten Position beweglich sind, in der die Absetzung der Blutkörperchen erfolgt, dadurch gekennzeichnet, dass die Vorrichtung mehrere Verschlusselemente (16; 19) zum hermetischen Abdichten der unteren Öffnungen (5) der an dem ersten Halteorgan (1) montierten Rohre (4) aufweist und dass die Halteorgane (1; 2) relativ zueinander in einer dritten Position beweglich sind, in der die Rohre (4) des ersten Halteorgans (1) mit den Verschlusselementen (16; 17) zusammenwirken, um die hermetische Abdichtung ihrer unteren Enden durch die Verschlusselemente zu gewährleisten.

2. Vorrichtung nach Anspruch 1, dadurch gekennzeichnet, dass die Verschlusselemente durch Stopfen (16) gebildet werden, die an dem zweiten Halteorgan (2) montiert sind und deren Abmessungen den Abmessungen der unteren Öffnungen (5) der an dem ersten Halteorgan montierten Rohre (4) entsprechen, wobei die Rohre (4) des ersten Halteorgans in der genannten dritten Position mit ihren unteren Enden auf die Verschlusselemente aufgesetzt sind.

3. Vorrichtung nach Anspruch 1, dadurch gekennzeichnet, dass die Verschlusselemente rohrförmige elastische Manschetten (19) aufweisen, die auf die unteren Enden der an dem ersten Halteorgan montierten Rohre (4) aufgezogen sind und über die unteren Enden der Rohre hinaus nach unten vorspringen und im Bereich des Bodens der an dem zweiten Halteorgan montierten Rohre (15) deformiert werden, wenn die Rohre (4) des ersten Halteorgans in der genannten dritten Position in die Rohre (15) des zweiten Halteorgans abgesenkt werden.

4. Vorrichtung nach einem der vorhergehenden Ansprüche, dadurch gekennzeichnet, dass die Halteorgane die Form konzentrischer Kreiszylinder (1; 2) aufweisen, an deren Umfang jeweils die Rohre (4; 15) montiert sind.

5. Verfahren zur Verwendung der Vorrichtung nach einem der vorhergehenden Ansprüche, bei dem man die Halteorgane in die genannte erste Position bringt, um die Rohre, die die Blutproben enthalten, an dem zweiten Halteorgan anzubringen, und die Halteorgane in die genannte zweite Position überführt und die Saugvorrichtung betätigt, um jedes der Rohre des ersten Halteorgans bis zu einem vorgegebenen oberen Bezugsniveau zu füllen, dadurch gekennzeichnet, dass man wenigstens eines der Halteorgane bewegt, bis die Halteorgane in ihre dritte Position überführt sind, wobei der Saugvorgang während dieser Bewegung aufrechterhalten bleibt, dass man den Saugvorgang abstellt und die Halteorgane in der dritten Position hält, bis die Ablesungen des Niveaus der abgesetzten Blutkörperchen beendet sind, und anschliessend die Vorrichtung spült.

## Claims

1. Apparatus for determining cell sedimentation rates, comprising a first support member incorporating a plurality of graduated tubes which are open at both ends and maintained vertically spaced out on the said support member, and a second support member incorporating a plurality of tubes of larger diameter than the tubes mounted on the first support member and capable of each receiving a blood sample, the said tubes being spaced out vertically on the said second support member, and a single suction device mounted at the upper end of the first support member and capable of being connected to the upper end of each of the tubes of the first support member, the support members being movable with respect to each other between a first position in which the tubes of the first support member are separated from the tubes of the second support member, a second position in which the tubes of the first support member descend at their lower end into the tubes of the second support member and a third position in which the sedimentation of the red cells is performed, characterized in that it comprises a plurality of plugging components (16; 19) capable of plugging hermetically the lower orifices (5) of the tubes (4) mounted on the first support member (1), the said support members (1; 2) being movable with respect to each other to a third position in which the tubes (4) of the first support member (1) interact with the plugging components (16; 17) to provide for hermetic plugging of their lower end by the said plugging components.

2. Apparatus according to Claim 1, characterized in that the plugging components consist of stoppers (16) mounted on the said second support member (2), of sizes corresponding to the sizes of the lower orifices (5) of the tubes (4) mounted on the first support member, the tubes (4) of the first support member engaging, in the said third position, at their lower end with the said plugging components.

3. Apparatus according to Claim 1, characterized in that the said plugging components comprise an elastic tubular tip (19) mounted tightly-fitting on the lower end of the tubes (4) which are mounted on the first support member, projecting downwards from the said end, the said tubular tips being deformed in the vicinity of the bottom of the tubes (15) mounted on the second support member when the tubes (4) of the first support member are lowered into the tubes (15) of the second support member in the said third position.

4. Apparatus according to any one of the preceding claims, characterized in that the support members are made in the form of concentric cylinders (1; 2) of circular section, at the periphery of which cylinders the tubes (4; 15) are mounted, respectively.

5. Method for using the apparatus according to any one of the preceding claims, in which the support members are placed in the said first position in order to put the tubes containing the blood samples in position on the second support member, the support members are brought to the said second position and the suction device is actuated to fill each of the tubes of the first support member up to a predetermined upper reference level, characterized in that at least one of the support members is moved until the support members are brought to their third position while the suction is maintained during the said movement, and in that the suction is eliminated and the supports are maintained in this third position until the readings of the level of the sedimented red cells are complete, after which the apparatus is rinsed.

Fig:1

*Fig:2*

*Fig:3*

Fig. 4

Fig. 5

Fig. 6

# Fig. 7

4

1

4

15

14

2

13

# Fig. 8

4

15

19